# EUROPEAN PATENT APPLICATION

(11) **EP 2 237 525 A1**
(43) Date of publication of application: **06.10.2010**
(21) Application number: 10157406.9
(22) Date of filing: 23.03.2010
(51) Int. Cl.: H04L 29/08, G06Q 30/00, H04L 29/06

(54) **System and method for dynamically updating a transport structure in an electronic network**

(30) Priority: 31.03.2009 US 383962
(71) Applicant: Sony Corporation, Minato-ku Tokyo 108-0075 (JP); Sony Electronics Inc., Park Ridge, NJ 07656 (US)
(72) Inventor: Loughery III, Donald L., Long Beach California 90803 (US); Frazier, Milton, San Marcos California 92069 (US); Rainier, Rajiv, San Diego California 92127 (US); Smith, Tim, Carlsbad California 92011 (US); Noronha, Austin, Sunnyvale California 94086 (US); Jacobs, Stephen, Ardsley New York 10022 (US)
(74) Representative: Jackson, Jonathan Andrew

(57) **Abstract**

A system for implementing an information distribution network includes an information service that is configured to provide information distribution services through the information distribution network. User devices are utilized by device users to communicate with the information service for receiving the information distribution services. Transport structures are implemented for communicating with various network entities in the information distribution network. The transport structures collect appropriate metadata for providing selected information from the information service to targeted ones of the device users. The metadata in the transport structures is dynamically updatable to accurately represent the network entities in the information distribution network.

## Description

This invention relates generally to techniques for distributing electronic information, and relates more particularly to a system and method for dynamically updating a transport structure in an electronic network.

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

In accordance with embodiments of the present invention, a system and method for dynamically updating a transport structure in an electronic network are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, third parties, and respective advertisers from an information service. In addition, the transport structures may also be utilized to provide links to targeted advertisements and/or electronic content to appropriate user devices.

In certain embodiments, one or more transport structures are initially created in any effective manner. For example, the transport structures may be embedded in user devices during manufacture, and then activated by device users. Alternately, an appropriate entity in the distribution system may create or otherwise provide the initial transport structures. Advertiser metadata from one or more advertisers may be added to the transport structures in any effective manner to represent relevant characteristics and advertising goals of the corresponding advertisers.

In addition, appropriate media files may be created to include information for dissemination to targeted device users through the distribution system. The media files may include any desired information, such as advertisements and/or content items. Next, one or more device users may perform a registration procedure to subscribe for receiving information from the distribution system. During the registration procedure, the device users typically provide various types of relevant information including, but not limited to, user metadata and device metadata. The transport structures are updated to include the metadata provided by the device users during the foregoing registration procedure.

In certain embodiments, one or more third parties may perform a third-party registration procedure to receive distribution services from the distribution system. The third-party registration procedure may be performed at any time, either in advance or when services are actually required from the distribution system. If one or more third parties have requested services from the distribution system, then the transport structures are updated to include relevant third party metadata, including third party requests for specific tasks or functions.

In certain embodiments, an ad server or other appropriate entity in the distribution system analyzes the transport structures using any appropriate techniques to identify targeted device users for received one or more corresponding media files. The ad server or other appropriate entity in the distribution system then prepares and sends links to the designated media file(s) to the user devices of the targeted device users. Finally, usage metadata stored in the transport structures is updated to reflect any relevant information rotated to the foregoing transmission of media file(s) to the user devices of the targeted device users.

Embodiments of the present invention may perform ongoing dynamic metadata updates of any of the contents of the transport structures at any desired or appropriate time. Similarly, the specific metadata categories/fields of the transport structures may be edited to accommodate alterations in various metadata. For at least the foregoing reasons, the present invention therefore provides an improved system and method for dynamically updating transport structures in an electronic network.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram of a distribution system, in accordance with one embodiment of the present invention;
FIG. 2A is a block diagram for one embodiment of a transport structure, in accordance with the present invention;
FIG. 2B is a block diagram for one embodiment of a media file, in accordance with the present invention;
FIG. 3 is a block diagram for one embodiment of a user device from FIG. 1, in accordance with the present invention;
FIG. 4 is a block diagram for one embodiment of the user memory from FIG. 3, in accordance with the present invention;
FIG. 5 is a block diagram for one embodiment of the information service from FIG. 1, in accordance with the present invention;
FIG. 6 is a block diagram for one embodiment of the transport server from FIG. 5, in accordance with the present invention;
FIG. 7 is a block diagram for one embodiment of the ad server from FIG. 5, in accordance with the present invention;
FIG. 8 is a block diagram for a transmission path, in accordance with one embodiment of the present invention; and
FIGS. 9A-9B are a flowchart of method steps for performing an information distribution procedure, in accordance with one embodiment of the present invention.

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

The present invention comprises a system for implementing an information distribution network, and includes an information service that is configured to provide information distribution services through the information distribution network. User devices are utilized by device users to communicate with the information service for receiving the information distribution services. Transport structures are implemented for communicating with various network entities in the information distribution network. The transport structures collect appropriate metadata for providing selected information from the information service to targeted ones of the device users. The metadata in the transport structures is dynamically updatable to accurately represent the network entities in the information distribution network.

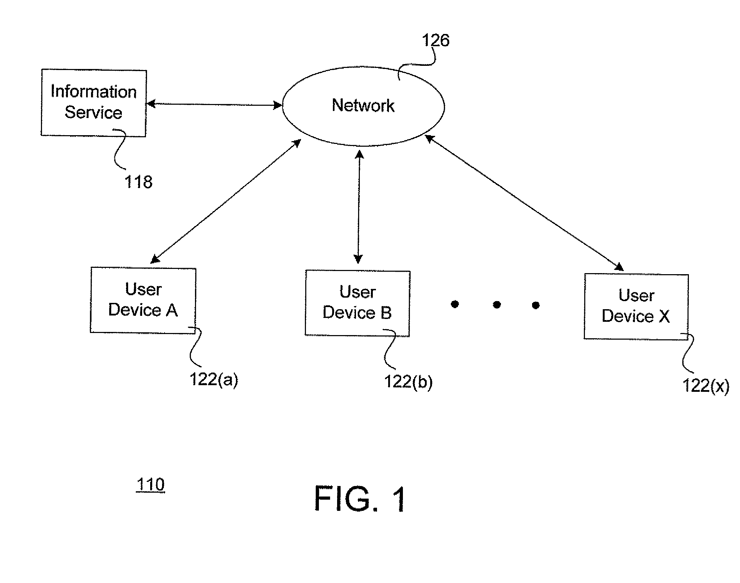

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1 embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines the device users and the various advertisers, and may also represent potential third parties.

In the FIG. 1 embodiment, distribution system 110 may be implemented and supported by a distribution control entity that offers distribution services to the advertisers, third parties, and device users in return for financial or other compensation. The distribution control entity may be a commercial enterprise that maintains and controls key elements of distribution system 110 such as the information service 118.

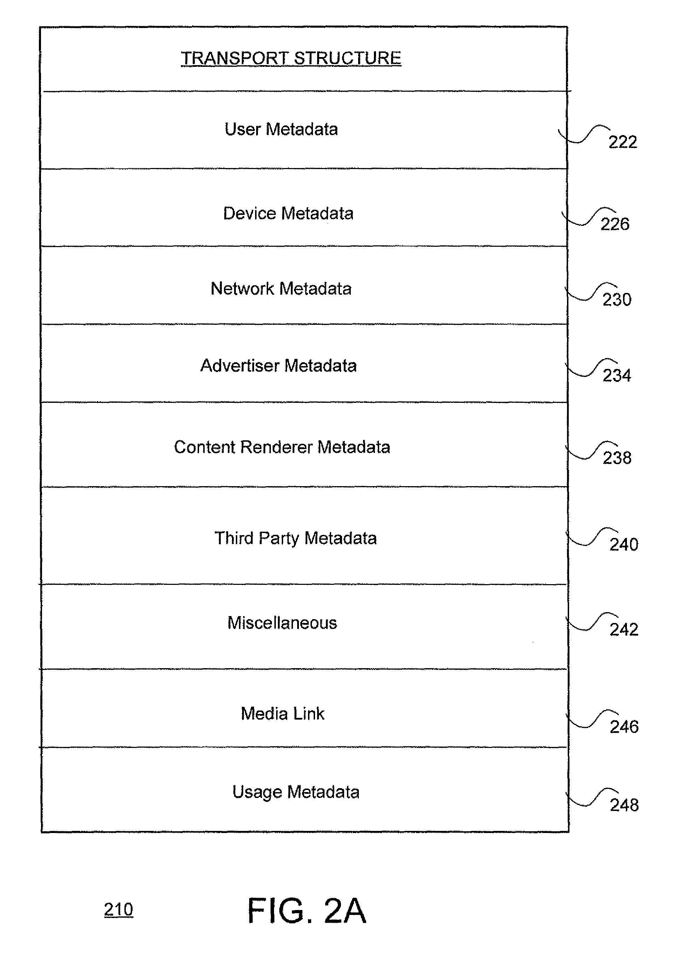

In accordance with the present invention, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, and respective advertisers from information service 118. In addition, the transport structures may also be utilized to transport or provide links to targeted advertisements and/or electronic content for appropriate user devices 122.

In certain embodiments, appropriate entities may dynamically update corresponding metadata in the transport structures at any time. The present invention thus proves an improved system and method for dynamically updating a transport structure to perform a distribution procedure. Further details regarding the implementation and utilization of transport structures in the FIG. 1 distribution system 110 are discussed below in conjunction with FIGS. 2A-9B.

Referring now to FIG. 2A, a block diagram for one embodiment of a transport structure 210 is shown, in accordance with the present invention. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

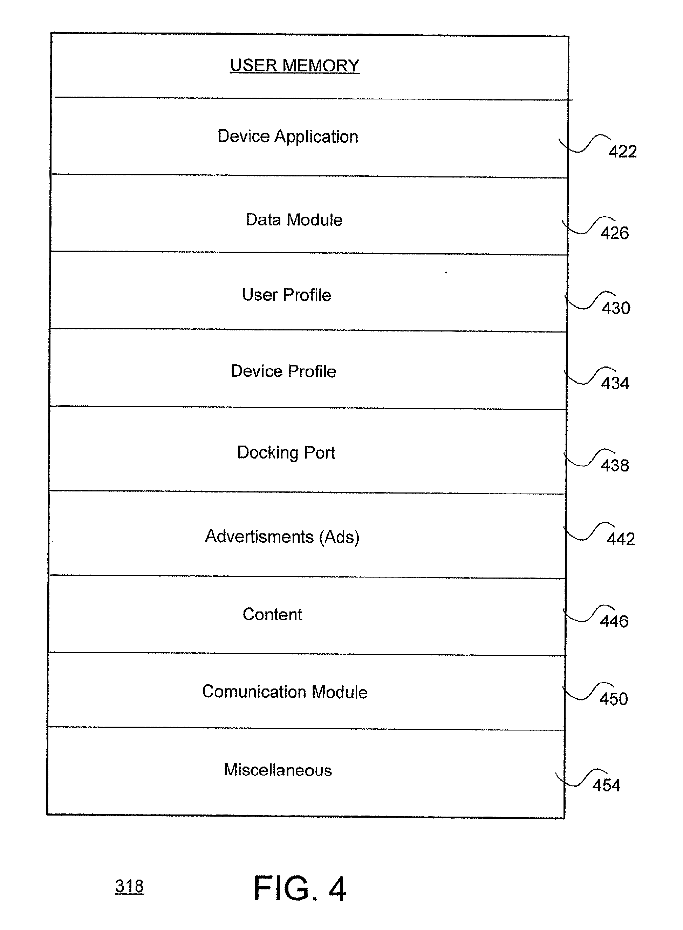

In the FIG. 2A embodiment, each of the metadata categories/fields includes information from one or more devices or entities from respective corresponding metadata-source types. For example, user metadata 222 may include information regarding one or more device users of user devices 122 (FIG. 1). In certain embodiments, user metadata 222 may be selectively compiled from one or more appropriate user profiles 430 (FIG. 4). Similarly, device metadata 226 may include information regarding one or more user devices 122. In certain embodiments, device metadata 226 may be selectively compiled from one or more appropriate device profiles 434 (FIG. 4). In the FIG. 2A embodiment, network metadata 230 may include information regarding various attributes or entities of electronic network 126 (FIG. 1).

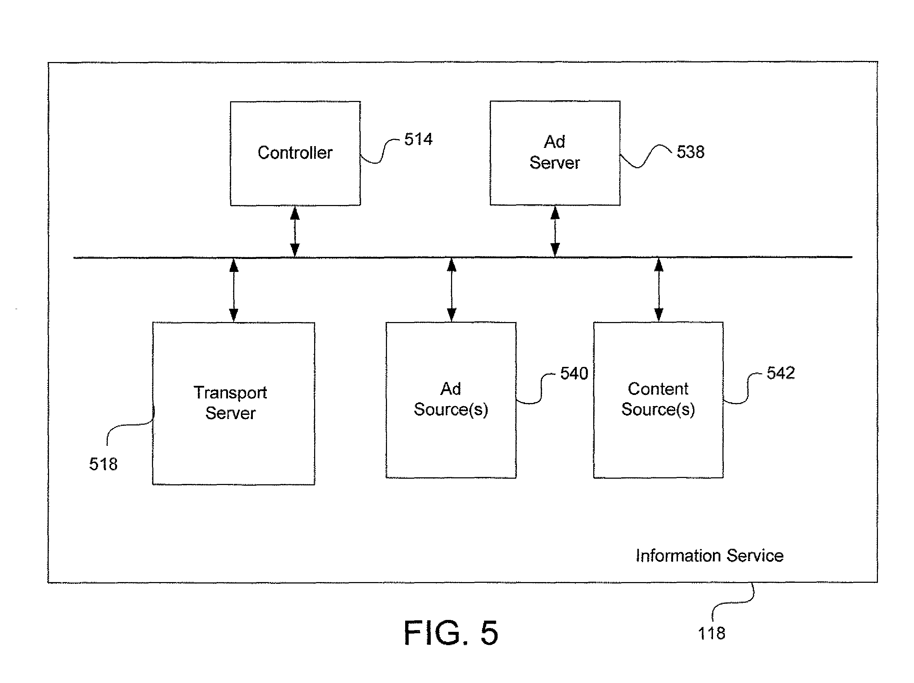

In the FIG. 2A embodiment, advertiser metadata 234 may include information regarding one or more advertisers that are associated with distribution system 110. In certain embodiments, the advertisers may be associated with ad sources 540 (FIG. 5). Similarly, content renderer metadata 238 may include information regarding one or more content renderers that are associated with distribution system 110. In certain embodiments, the content renderers may be associated with content sources 542 (FIG. 5).

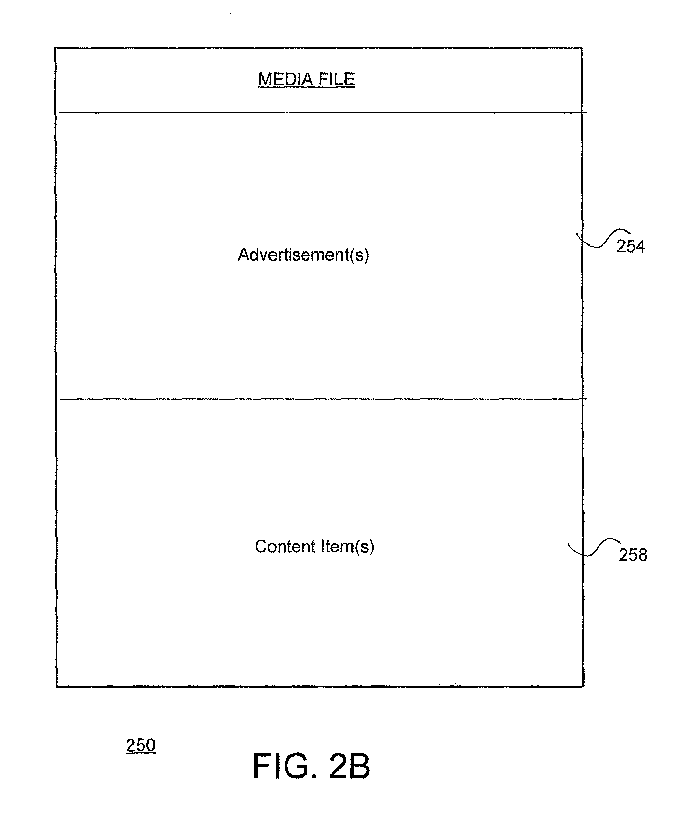

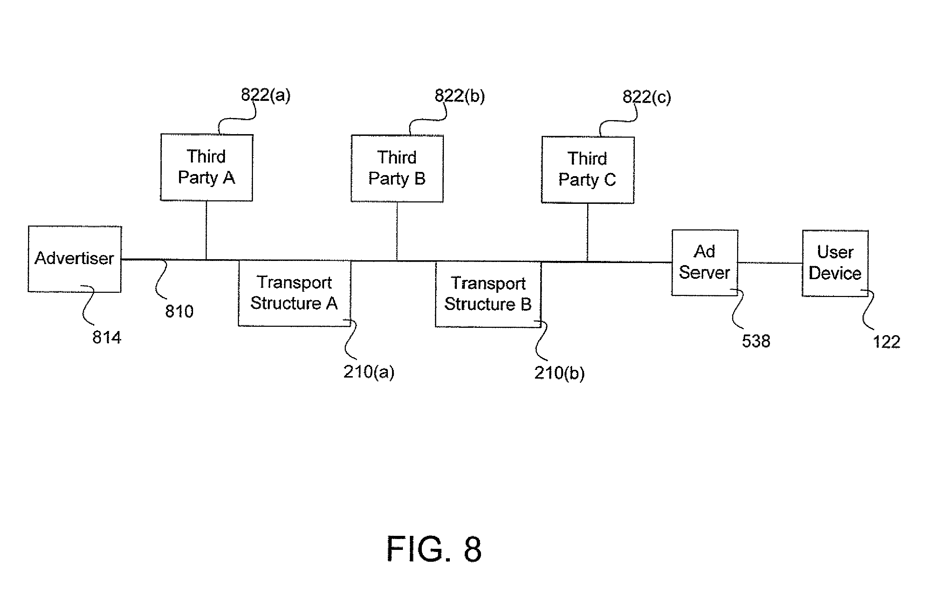

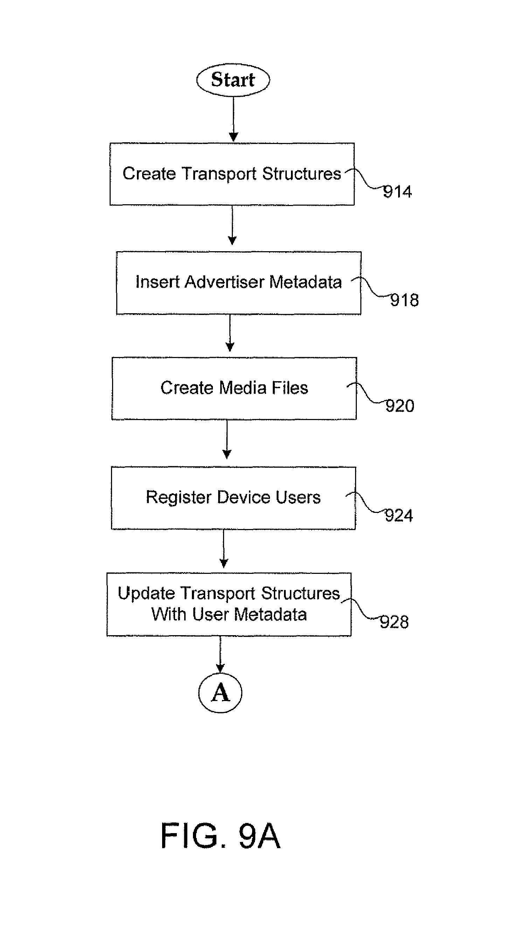

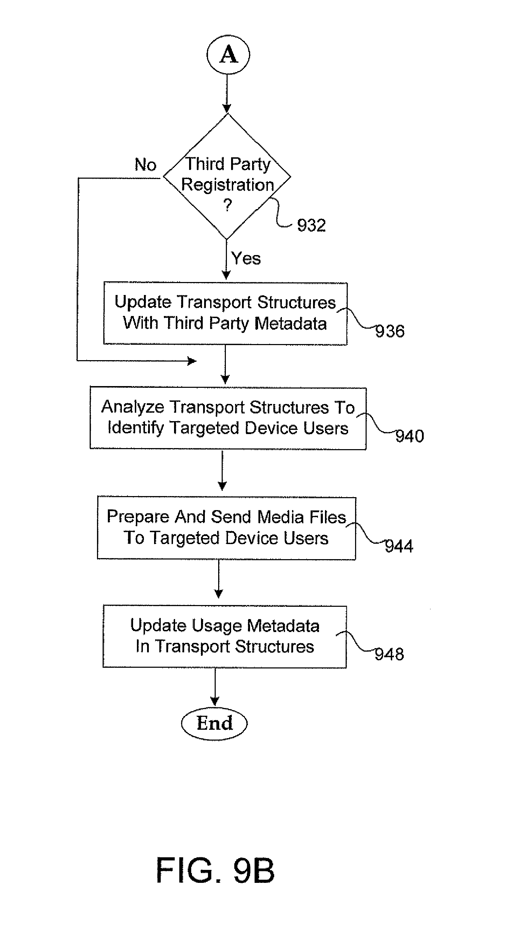

In the FIG. 2A embodiment, third party metadata 240 may include information regarding one or more third parties that are associated with distribution system 110. The utilization of third parties is further discussed below in conjunction with FIGS. 8 and 9. Miscellaneous information 942 may include any additional data or other appropriate information. Media link 246 may include appropriate information to indicate a location or a connection means for accessing one or more media files, as discussed below in conjunction with FIG. 2B.

Various entities in distribution system 110 may utilize the information in transport structure 210 in any appropriate manner. For example, an ad targeting procedure may be performed by matching compatible elements of user metadata 922, device metadata 926, advertiser metadata 934, and third party metadata 240 to thereby identify appropriate types of relevant advertising information for automatic transmission to targeted device users.

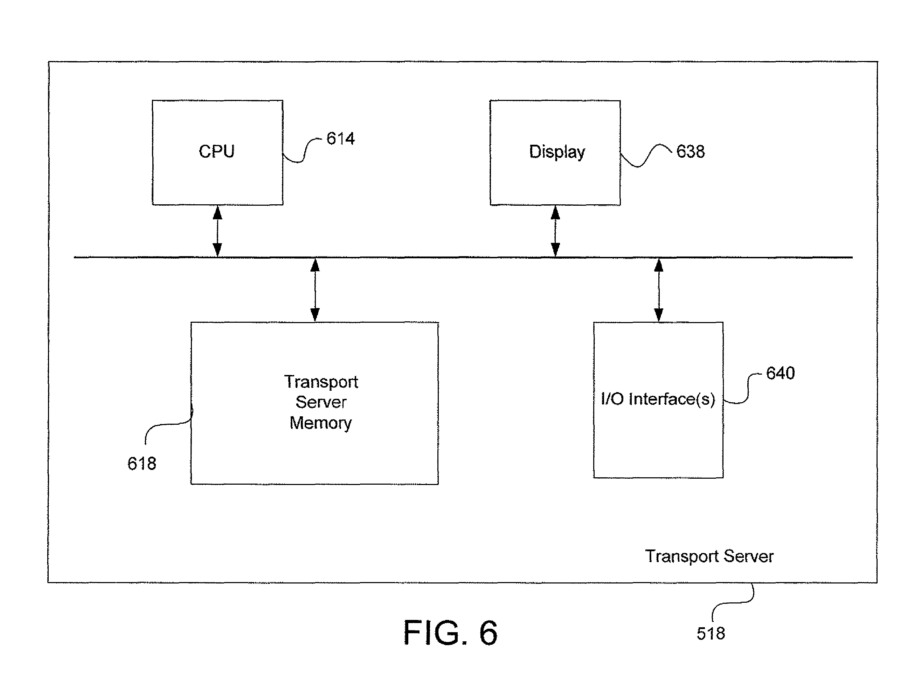

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210. For example, a transport server (see FIG. 6) may manage the origination and operation of transport structures 210. Further details regarding the implementation and utilization of the FIG. 2A transport structure 210 are discussed below in conjunction with FIGS. 2B-9B.

Referring now to FIG. 2B, a block diagram for one embodiment of a media file 250 is shown, in accordance with the present invention. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

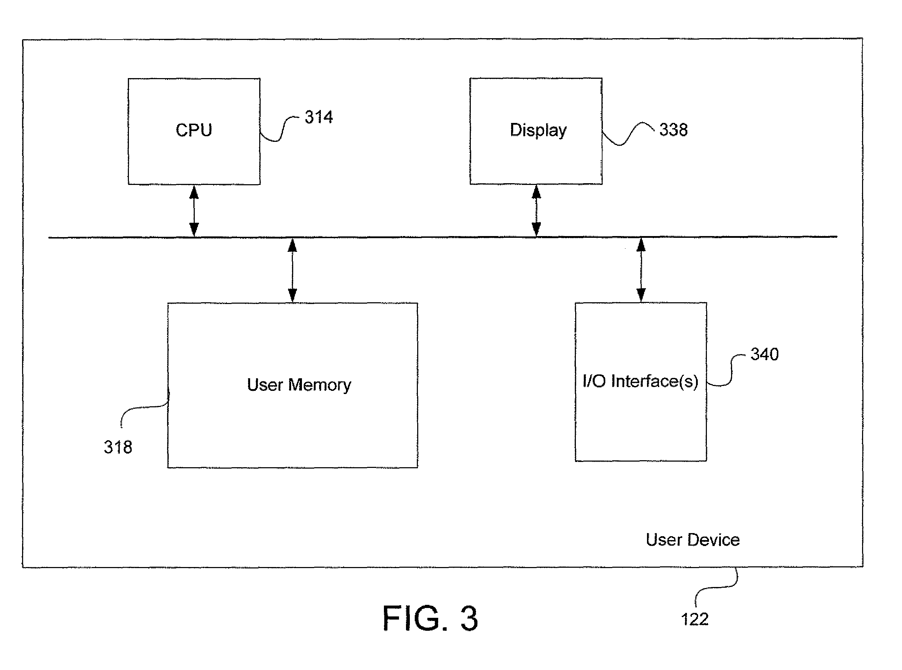

In the FIG. 2B embodiment, advertisements (ads) 254 may include any appropriate type of targeted advertising information that has been selected for transmission to appropriate ones of the user devices 122 (FIG. 1). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-9B.

Referring now to FIG. 3, a block diagram for one embodiment of a FIG. 1 user device 122 is shown, in accordance with the present invention. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-9B.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, and a device configuration.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1) specifically for a device user of user device 122. Similarly, content 446 may include targeted electronic content information that has been received via distribution system 110 (FIG. 1) specifically for a device user of user device 122.

In the FIG. 4 embodiment, a user device 122 may utilize communication module 450 to perform bi-directional electronic communication procedures with any appropriate remote entity. In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-9B.

Referring now to FIG. 5, a block diagram for one embodiment of the FIG. 1 information service 118 is shown, in accordance with the present invention. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIG. 6. In the FIG. 5 embodiment, ad source(s) 540 may include one or more appropriate entities for providing advertisement information for dissemination through distribution system 110 (FIG. 1). For example, ad sources 540 may include various commercial enterprises, specific advertisers, or advertising developers.

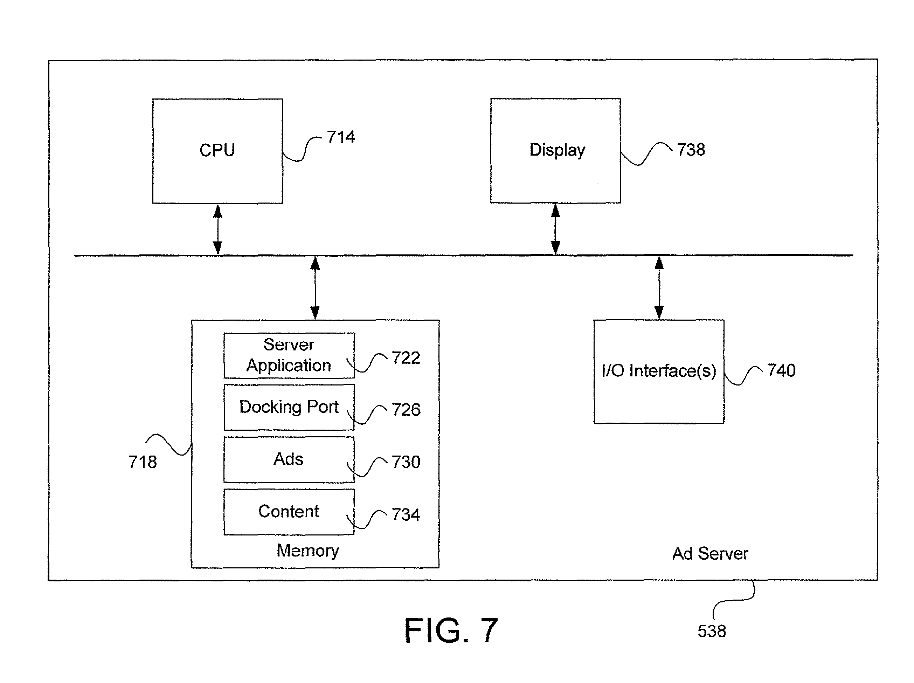

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1) by utilizing metadata from one or more transport structures 210 (FIG. 2). One embodiment of ad server 538 is further discussed below in conjunction with FIG. 7. Additional details for the implementation and utilization of information service 118 are further discussed below in conjunction with FIGS. 6-9B.

Referring now to FIG. 6, a block diagram for one embodiment of the transport server 518 of FIG. 5 is shown, in accordance with the present invention. In the FIG. 6 embodiment, transport server 518 includes, but is not limited to, a central processing unit (CPU) 614, a memory 618, a display 638, and one or more input/output interface(s) (I/O interface(s)) 640. The FIG. 6 embodiment is presented for purposes of illustration, and in alternate embodiments, transport servers 518 may be implemented using components and configurations in addition to, or instead of, certain of those components and configurations discussed in conjunction with the FIG. 6 embodiment.

In the FIG. 6 embodiment, CPU 614 may be implemented to include any appropriate and compatible microprocessor device that preferably executes software instructions to thereby control and manage the operation of transport server 518. The FIG. 6 display 638 may include any effective type of display technology including a cathode-ray-tube monitor or a liquid-crystal display device with an appropriate screen for displaying various information to a device user. In the FIG. 6 embodiment, I/O interface(s) 640 may include one or more input and/or output interfaces to receive and/or transmit any required types of information by user device 122. In the FIG. 6 embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

In the FIG. 6B embodiment, transport server memory 618 may include, but is not limited to, a number of software programs and data that are disclosed below. For example, transport server memory 618 may include a server application of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager to manage and coordinate various functions for one or more transport structures 210 (FIG. 2), in accordance with the present invention. In certain embodiments, the TS manager may include a registration module for coordinating registration procedures to register device users of user devices 122 for participating in various authorized distribution services from distribution system 110 (FIG. 1). A TS database may include any appropriate information regarding the transport structures 210 that provide distribution services to various entities in distribution system 110.

In certain embodiments, the TS manager may continually update respective transport structure information in the TS database to reflect the current status of transport structures 210 in distribution system 110. The transport server 518 may utilize a communication module to perform bi-directional electronic communication procedures with any appropriate remote entity. For example, the communication module may be utilized to remotely communicate with transport structures 210 in distribution system 110.

Referring now to FIG. 7, a block diagram for one embodiment of the ad server 538 of FIG. 5 is shown, in accordance with the present invention. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze metadata from transport structures 210 (FIG. 2A) to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2) to transfer ads 730 and/or content 734. In the FIG. 7 embodiment, ads 730 include advertising information that is provided to ad server 538 from any appropriate entities, such as ad sources 540

(FIG. 5). Similarly, in the FIG. 7 embodiment, content 734 includes electronic content that is provided to ad server 538 from any appropriate entities, such as content sources 542 (FIG. 5). Additional details for the implementation and utilization of ad server 538 are further discussed below in conjunction with FIGS. 8-9B.

Referring now to FIG. 8, a block diagram for one embodiment of a transmission path 810 is shown, in accordance with the present invention. The FIG. 8 embodiment is presented for purposes of illustration, and in alternate embodiments, transmission paths 810 may be implemented by utilizing components and configurations in addition to, or instead of, certain of those components and configurations discussed in conjunction with the FIG. 8 embodiment.

In certain embodiments, the FIG. 8 transmission path 810 may be implemented a part of any type of information distribution system. For example, transmission path 810 may be implemented as part of the distribution system 110 of FIG. 1. In the FIG. 8 embodiment, transport structures 210(a) and 210(b) are shown traveling along transmission path 810. The transport structures 210 may navigate in any manner to and from any appropriate entities.

In the FIG. 8 embodiment, at least one user device 122 and at least one advertiser 814 have populated the transport structures 210 with corresponding user metadata 222 and advertiser metadata 234 as discussed above in conjunction with FIG. 2A. In accordance with one embodiment of the present invention, a third party A 822(a), a third party B 822(b), and a third party C 822(c) are also in communication with transmission path 810.

In the FIG. 8 embodiment, the third parties 822 may include any desired entity or functionality. For example, a third party 822 may include a commercial entity that subscribes to information service 118 (see FIG. 1) for targeting messages to potential customers based upon relevant factors, such as their geographic location. As another example, a third party 822 may also include clients of a social networking platform that wish to receive targeted information from information service 118 or other appropriate source.

In the FIG. 8 embodiment, third parties 822 may advantageously access transport structures 210 along transmission path 810 to evaluate relevant information such as user metadata 234 (FIG. 2A). In the FIG. 8 embodiment, third parties 822 may then add third party metadata 240 (FIG. 2A) or other information to the transport structures 210 to enable or affirmatively request desired material to be provided to targeted device users. In the FIG. 8 embodiment, ad server 538 may then analyze the various information/metadata in transport structures 210 to thereby select and send appropriate targeted information to one or more user devices 122.

The present invention therefore allows advertisers 814 and third parties 822 to establish targeting goals independent of the particular media files 250 (FIG. 2B) and the specific platform, while also allowing ad networks to establish placement inventory based upon criteria outside of media parameters. The transport structures 210 thus provide a modular and scaleable file standard (or wrapper or header), in which the media and metadata are both dynamic variables and can act independently.

In certain embodiments, the transport structures 210 are only tied to the media file 250 (FIG. 2B) for the period of time that the media is scheduled or available to be viewed. Certain fields in the transport structures 210 are user specific, such as age, zip code, and gender. Other fields dictate on which platform and formats the media is allowed to be viewed (e.g. PSN, IPTV, mobile, HD, SD, etc). Still other fields are left available for third party developers to utilize in writing new applications which derive benefit or intelligence from the metadata stored in the transport structures 210.

Both the specific fields and particular metadata of transport structures 210 can be modified while moving through the network, both before and after the media is viewed. As the viewers/users consume, interact or view the media, additional information may be added or overwritten to the transport structures 210, thereby providing a more real-time perspective and enhanced value to the transport structures 210. The metadata in the transport structures 210 may then be made available to be read by advertising networks or other appropriate entities for future targeting on other platforms to the same consumer or new ads/media served to the same platform.

Referring now to FIGS. 9A-9B, a flowchart of method steps for performing an information distribution procedure is shown, in accordance with one embodiment of the present invention. The FIG. 9 flowchart is presented for purposes of illustration, and in alternate embodiments, the present invention may utilize steps and sequences other than those steps and sequences discussed in conjunction with the FIG. 9 embodiment.

In step 914 of FIG. 9A, one or more transport structures 210 (FIG. 2A) are initially created in any effective manner. For example, transport structures 210 may be embedded in user devices 122 during manufacture, and then activated by device users. Alternately, an appropriate entity in a distribution system 110 may create or otherwise provide the initial transport structures 210. In step 918, advertiser metadata 234 from one or more advertisers 814 may be added to the transport structures 210 in any desired manner to represent relevant characteristics and advertising goals of the corresponding advertisers 814.

In step 920, appropriate media files 250 may be created to include information for dissemination to targeted device users through distribution system 110. The media files 250 may include any desired information, such as advertisements 254 and/or content items 258. In step 924, one or more device users perform a registration procedure to receive information from the distribution system 110. During the registration procedure, the device users typically provide relevant information including, but not limited to, user metadata 222 and device metadata, 226. In step 928, the transport structures 210 are updated to include the metadata provided by the device users during the foregoing registration procedure. The FIG. 9A process then advances to step 932 of FIG. 9B through connecting letter "A."

In step 932, the transport structures 210 or another appropriate entity in distribution system 110 determine whether any third parties 822 have performed a third-party registration procedure to receive services from the distribution system 110. The third-party registration procedure may be performed at any time, either in advance or when services are actually required from the distribution system 110. In step 936, if one or more third parties 822 have requested services from distribution system 110, then the transport structures 210 are updated to include relevant third party metadata, including third party requests for specific tasks or functions.

In step 940, an ad server 538 or other appropriate entity in distribution system 110 analyzes the transport structures 210 using any appropriate techniques to identify targeted device users for received one or more corresponding media files 250. In step 944, the ad server 538 or other appropriate entity in distribution system 110 prepares and sends links to the designated media file(s) 250 to user devices 122 of the targeted device users. Finally, in step 948, usage metadata 248 in the transport structures 210 is updated to reflect any relevant information related to the foregoing transmission of media file(s) 250 to the user devices 122 of the targeted device users.

For purposes of illustration, the FIG. 9 embodiment discusses updating transport structures 210 at specific times in the distribution process. For example, advertiser metadata 234 and user metadata 222 are described as being inserted into the transport structures 210 initially, and third party metadata 240 is described as being inserted at a somewhat later point. However, the present invention readily contemplates any network entity performing ongoing dynamic metadata updates of any of the contents of the transport structures 210 at any desired or appropriate time. Similarly, the specific metadata categories/fields of the transport structures 210 may also be edited to accommodate alterations in various metadata. For at least the foregoing reasons, the present invention therefore provides an improved system and method for dynamically updating transport structures 210 in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for implementing an information distribution network, comprising:
an information service that is configured to provide information distribution services through said information distribution network;
user devices that device users utilize to communicate with said information service for receiving said information distribution services; and
a transport structure that communicates with network entities in said information distribution network, said transport structure collecting metadata for providing selected information from said information service to targeted ones of said device users, said metadata being dynamically updatable to accurately represent said network entities in said information distribution network.

2. The system of claim 1 wherein said metadata includes user metadata regarding said device users, device metadata regarding said user devices, and advertiser metadata regarding advertisers associated with said selected information.

3. The system of claim 2 further comprising one or more third parties, said third parties accessing said transport structure to insert third party metadata for identifying and providing third party information to said targeted ones of said device users.

4. The system of claim 1 wherein said transport structure includes a media link to a media file that contains said selected information that includes advertising information and electronic content.

5. The system of claim 1 wherein said transport structure includes usage metadata that is updated with transfer information corresponding to each transfer of said selected information to said user devices.

6. The system of claim 2 wherein said transport structure moves through said information distribution network to collect said metadata, said transport structure also providing media links for said selected information to said targeted ones of said device users, said user metadata including a personal name, gender, age, religion, hobbies, interests, occupation, marital status, residence, income, Internet browsing history, and credit-card transaction records of said device users.

7. The system of claim 1 wherein said information service utilizes a push technique to automatically select and transmit only said selected information that is relevant to said device users in light of specific characteristics provided in said metadata, said selected information being targeted to said device users by matching aspects of said selected information, said advertiser metadata, and said third party metadata to specific characteristics from said user metadata and said device metadata.

8. The system of claim 1 wherein said transport structure includes user metadata, device metadata, network metadata, advertiser metadata, content renderer metadata, third party metadata, usage metadata, and one or more media links to said selected information.

9. The system of claim 1 wherein said device users perform a registration procedure with said information service to participate in said information distribution services, said device users providing user metadata to said information service during said registration procedure.

10. The system of claim 1 wherein said selected information is aggregated and provided to said user devices by an ad server of said information service.

11. A user device for supporting an information distribution procedure, comprising:
a device application that said user device utilizes to communicate with an information service for receiving information distribution services through an information distribution network; and
a transport structure that communicates with network entities in said information distribution network, said transport structure collecting metadata for targeting selected information from said information service to said device user, said metadata being dynamically updatable to accurately represent said network entities in said information distribution network.

12. The user device of claim 11 wherein said metadata includes user metadata regarding said device user, device metadata regarding said user device, and advertiser metadata regarding advertisers associated with said selected information.

13. The user device of claim 12 wherein one or more third parties in said information distribution network access said transport structure to insert third party metadata for identifying and providing third party information to said device user.

14. The user device of claim 11 wherein said transport structure includes a media link to a media file that contains said selected information, said selected information in said media file including advertising information and electronic content.

15. The user device of claim 11 wherein said transport structure includes usage metadata that is updated with transfer information corresponding to each transfer of said selected information to said user device.
